# EUROPÄISCHE PATENTSCHRIFT

(11) **EP 3 580 471 B1**
(45) Veröffentlichungstag und Bekanntmachung des Hinweises auf die Patenterteilung: **24.03.2021**
(21) Anmeldenummer: 18701089.7
(22) Anmeldetag: 02.01.2018
(51) Int. Cl.: F16F 15/131, F16F 15/14, F16D 25/0638

(54) **DREHMOMENTÜBERTRAGUNGSANORDNUNG**
TORQUE TRANSMISSION ARRANGEMENT
ARRANGEMENT DE TRANSMISSION DE COUPLE

(30) Priorität: 07.02.2017 DE 102017201913
(43) Veröffentlichungstag der Anmeldung: 18.12.2019
(73) Patentinhaber: ZF Friedrichshafen AG, 88046 Friedrichshafen (DE)
(72) Erfinder: EINENKEL, Steffen, 96170 Priesendorf (DE); KUNDERMANN, Wolfgang, 65599 Dornburg-Dorndorf (DE); KRAM, Matthias, 97080 Würzburg (DE); ORLAMÜNDER, Andreas, 97453 Schonungen (DE)
(74) Vertreter: ZF Friedrichshafen AG
(86) Internationale Anmeldenummer: PCT/EP2018/050017
(87) Internationale Veröffentlichungsnummer: WO 2018/145820

(56) Entgegenhaltungen:
- EP-A1- 3 026 296
- WO-A1-2010/127663
- WO-A1-2014/015868
- WO-A1-2015/192842
- DE-A1-102009 024 217
- DE-A1-102009 059 942
- DE-A1-102014 221 573

## Beschreibung

Die vorliegende Erfindung betrifft eine Drehmomentübertragungsanordnung, mit welcher in einem Antriebsstrang eines Fahrzeugs ein Drehmoment zwischen einem Antriebsaggregat, beispielsweise einer Brennkraftmaschine, und einem Getriebe übertragen werden kann und beispielsweise zur Durchführung von Schaltvorgängen in dem Getriebe der Drehmomentenfluss zwischen dem Antriebsaggregat und dem Getriebe unterbrochen werden kann.

Durch die WO 2014/015868 A1 ist eine Drehmomentübertragungsanordnung bekannt, die ein Gehäuse umfasst mit nasslaufenden Kupplungsanordnungen mit jeweils einem antriebsseitigen Reibelemententräger, mit dem eine Mehrzahl von antriebsseitigen Reibelementen zur gemeinsamen Drehung um eine Drehachse gekoppelt ist, und mit jeweils einem abtriebsseitigen Reibelemententräger, mit dem eine Mehrzahl von abtriebsseitigen Reibelementen zur gemeinsamen Drehung um die Drehachse gekoppelt ist, wobei die antriebsseitigen Reibelemente mit den abtriebsseitigen Reibelementen in Reibeingriff bringbar sind. Während die antriebsseitigen Reibelemententräger mit einem Antrieb, wie einer Antriebsnabe, drehfest sind, sind die abtriebsseitigen Reibelemententräger drehfest mit einem Abtrieb, wie einer Getriebeeingangswelle. Zudem sind die antriebsseitigen Reibelemententräger mittels Axiallagerungen über die abtriebsseitigen Reibelemententräger gegenüber Bauteilen von An- und Abtrieb abgestützt. Axial mittig zwischen den Reibelemententrägern ist an den antriebsseitigen Reibelemententrägern ein Auslenkungsmassenträger einer Auslenkungsmassenanordnung angebracht, der wenigstens eine bezüglich des Auslenkungsmassenträgers aus einer Grund-Relativlage auslenkbar getragene Auslenkungsmasse aufnimmt, wobei sich bei Auslenkung der wenigstens einen Auslenkungsmasse aus der Grund-Relativlage der Radialabstand der wenigstens einen Auslenkungsmasse bezüglich einer Drehachse des Gehäuses ändert. Der Auslenkungsmassenträger ist durch Aufnahme an den antriebsseitigen Reibelemententrägern axial und radial abgestützt, und ragt radial über die Reibelemententräger hinaus, so dass die wenigstens eine Auslenkungsmasse die Kupplungsanordnung radial außen axial überlappend übergreift.

Eine weitere Drehmomentübertragungsanordnung mit einer nasslaufenden Kupplungsanordnung ist durch die EP 3 026 296 A1 bekannt. Eine im Gehäuse der als hydrodynamischer Drehmomentwandler ausgebildeten Drehmomentübertragungsanordnung vorgesehene Auslenkungsanordnung weist ein Trägerelement einer Trägeranordnung auf, das an einer Nabe zentriert ist, die einen Torsionsschwingungsdämpfer und, über diesen, auch ein Turbinenrad drehfest aufnimmt. An dem Trägerelement, das zur Ansteuerung des Torsionsschwingungsdämpfers dient, ist ein scheibenartiges Auslenkungsmassenträgerelement befestigt, das zusammen mit einem parallel hierzu angeordneten zweiten Auslenkungsmassenträgerelement zur relativ bewegbaren Aufnahme wenigstens einer axial zwischen diesen Auslenkungsmassenträgerelementen vorgesehenen Auslenkungsmasse dient. Radial innerhalb der Auslenkungsmassenträgerelemente sowie der wenigstens einen Auslenkungsmasse ist, ebenfalls mit Befestigung an dem Trägerelement, ein abtriebsseitiger Reibelemententräger vorgesehen, der eine Mehrzahl abtriebsseitiger Reibelemente drehfest aufnimmt, und über antriebsseitige Reibelemente, die drehfest mit einem am Gehäuse befestigten antriebsseitigen Reibelemententräger sind, mit dem letztgenannten in Wirkverbindung gebracht werden kann. Die scheibenartigen Auslenkungsmassenträgerelemente sowie die wenigstens eine Auslenkungsmasse umgeben eine die Reibelemententräger sowie die Reibelemente aufweisende Kupplungsanordnung, und sind in axialer Richtung überlappend mit dieser angeordnet.

Eine nochmals andere Drehmomentübertragungsanordnung ist aus der US 8,403,120 B2 bekannt. Eine als Doppelkupplung ausgebildete nasslaufende Kupplungsanordnung ist in einem Nassraum angeordnet. Ein antriebsseitiger Reibelemententräger dieser Kupplungsanordnung ist mit der Sekundärseite einer die Kupplungsanordnung mit einer Antriebswelle eines Antriebsaggregats koppelnden Torsionsschwingungsdämpferanordnung verbunden. In die Sekundärseite der außerhalb des Nassraums angeordneten Torsionsschwingungsdämpferanordnung ist eine Auslenkungsmassenanordnung integriert. Radial außerhalb der Kupplungsanordnung und mit dieser axial sich überlappend ist der mit einer Primärseite der Torsionsschwingungsdämpferanordnung verbundene Rotor einer Elektromaschine positioniert.

Es ist die Aufgabe der vorliegenden Erfindung, eine Drehmomentübertragungsanordnung für den Antriebsstrang eines Fahrzeugs vorzusehen, welche bei effizienter Bauraumausnutzung ein verbessertes Schwingungsdämpfungsverhalten aufweist.

Erfindungsgemäß wird diese Aufgabe gelöst durch eine Drehmomentübertragungsanordnung für den Antriebsstrang eines Fahrzeugs, umfassend:
- eine nasslaufende Kupplungsanordnung mit einem antriebsseitigen Reibelemententräger und einer Mehrzahl von mit diesem zur gemeinsamen Drehung um eine Drehachse gekoppelten antriebsseitigen Reibelementen und mit einem abtriebsseitigen Reibelemententräger und einer Mehrzahl von mit diesem zur gemeinsamen Drehung um die Drehachse gekoppelten und mit den antriebsseitigen Reibelementen in Reibeingriff bringbaren abtriebsseitigen Reibelementen,
- eine mit dem antriebsseitigen Reibelemententräger zur gemeinsamen Drehung um die Drehachse gekoppelte Auslenkungsmassenanordnung mit einem Auslenkungsmassenträger und wenigstens einer an dem Auslenkungsmassenträger bezüglich diesem aus einer Grund-Relativlage auslenkbar getragenen Auslenkungsmasse, wobei bei Auslenkung der wenigstens einen Auslenkungsmasse aus der Grund-Relativlage ein Radialabstand der wenigstens einen Auslenkungsmasse bezüglich der Drehachse sich ändert,
wobei die Auslenkungsmassenanordnung die Kupplungsanordnung radial außen umgebend und in axialer Richtung wenigstens bereichsweise überlappend angeordnet ist und an ihren beiden axialen Seiten vermittels einer Trägeranordnung radial abgestützt ist.

Von besonderer Bedeutung hierbei ist, dass der Auslenkungsmassenträger axial beidseits der wenigstens einen Auslenkungsmasse jeweils ein scheibenartiges Auslenkungsmassenträgerelement umfasst, und dass die Trägeranordnung an jeder axialen Seite der Auslenkungsmassenanordnung ein mit dem an dieser axialen Seite der Auslenkungsmassenanordnung vorgesehenen Auslenkungsmassenträgerelement verbundenes scheibenartiges Trägerelement umfasst, und dass eines der Trägerelemente in seinem radial inneren Endbereich mit dem antriebsseitigen Reibelemententräger durch Verschweißung verbunden ist und dass das andere Trägerelement (86) sich über den radial inneren Endbereich des einen Trägerelements (84) hinaus weiter nach radial innen erstreckt.

Bei dem erfindungsgemäßen Aufbau einer Drehmomentübertragungsanordnung wird durch die die Kupplungsanordnung axial übergreifende Positionierung der Auslenkungsmassenanordnung der radial außerhalb der Kupplungsanordnung zur Verfügung stehende und im Allgemeinen auch innerhalb des die Kupplungsanordnung aufnehmenden Nassraums liegende Bauraum zur Positionierung der Auslenkungsmassenanordnung genutzt bzw. nutzbar. Damit besteht einerseits die Möglichkeit, die beispielsweise von einer Torsionsschwingungsdämpferanordnung losgelöste Auslenkungsmassenanordnung baulich hinsichtlich der durch diese vorzusehende Dämpfungsfunktionalität optimiert auszugestalten. Andererseits kann durch Positionierung der Auslenkungsmassenanordnung in einem Bereich, der auch innerhalb des die Kupplungsanordnung aufnehmenden Nassraums liegt, gleichzeitig für eine Schmierung der Auslenkungsmassenanordnung durch das im Nassraum im Allgemeinen vorhandene Fluid und somit für eine verbesserte Bewegbarkeit der wenigstens einen Auslenkungsmasse der Auslenkungsmassenanordnung gesorgt werden.

Für eine stabile, einfach zu realisierende Anbindung der Auslenkungsmassenanordnung wird vorgeschlagen, dass der Auslenkungsmassenträger axial beidseits der wenigstens einen Auslenkungsmasse jeweils ein scheibenartiges Auslenkungsmassenträgerelement umfasst, und dass die Trägeranordnung an jeder axialen Seite der Auslenkungsmassenanordnung ein mit dem an dieser axialen Seite der Auslenkungsmassenanordnung vorgesehenen Auslenkungsmassenträgerelement verbundenes scheibenartiges Trägerelement umfasst.

Dabei wird eine an beiden axialen Seiten der Auslenkungsmassenanordnung im Wesentlichen gleichartige Anbindung bzw. Abstützung dadurch realisiert, dass die Trägeranordnung an jeder axialen Seite der Auslenkungsmassenanordnung ein Trägerelement umfasst.

Eine sehr kompakte Bauweise kann erreicht werden, wenn eines der Trägerelemente in seinem radial inneren Endbereich mit dem antriebsseitigen Reibelemententräger verbunden ist, vorzugsweise durch Verschweißung.

Bei einer aufgrund der Möglichkeit, gleiche Herstellungswerkzeuge verwenden zu können, besonders vorteilhaften Variante wird vorgeschlagen, dass das andere Trägerelement in seinem das eine Trägerelement radial überdeckenden Erstreckungsbereich im Wesentlichen formidentisch zu dem einen Trägerelement ausgebildet ist.

Um die nasslaufende Kopplungsanordnung mit Fluid, als beispielsweise Öl, zu versorgen, ist im Allgemeinen eine Fluidpumpe vorgesehen. Diese kann gemäß einem besonders vorteilhaften Aspekt der vorliegenden Erfindung dadurch angetrieben werden, dass an einem Trägerelement ein mit der Fluidpumpe in Antriebsverbindung bringbares Pumpenantriebselement vorgesehen ist. Dabei kann das Pumpenantriebselement an einem radial inneren Endbereich des anderen Trägerelements vorgesehen sein.

Für eine einfach zu realisierende und stabile Anbindung wenigstens eines Trägerelements an die Auslenkungsmassenanordnung kann vorgesehen sein, dass die beiden Auslenkungsmassenträgerelemente durch eine Mehrzahl von diese in vorbestimmtem axialen Abstand zueinander haltenden Distanzelementen miteinander verbunden sind, und dass an wenigstens einer axialen Seite der Auslenkungsmassenanordnung ein Trägerelement durch wenigstens ein Distanzelement, vorzugsweise mehrere Distanzelemente, mit dem an dieser axialen Seite vorgesehenen Auslenkungsmassenträgerelement verbunden ist.

Die vorliegende Erfindung betrifft ferner ein Antriebssystem, umfassend ein Antriebsaggregat und eine erfindungsgemäß aufgebaute Drehmomentübertragungsanordnung, wobei der antriebsseitige Reibelemententräger vorzugsweise vermittels einer Torsionsschwingungsdämpferanordnung mit einer Antriebswelle des Antriebsaggregats zur gemeinsamen Drehung gekoppelt ist und der abtriebsseitige Reibelemententräger mit einer Getriebeeingangswelle eines Getriebes zur gemeinsamen Drehung gekoppelt ist, wobei die Drehmomentübertragungsanordnung in einem im Wesentlichen fluiddicht abgeschlossenen Nassraum angeordnet ist.

Zum Erhalt einer kompakten Bauweise wird vorgeschlagen, dass die Auslenkungsmassenanordnung durch die Trägeranordnung an ihrer dem Antriebsaggregat zugewandten axialen Seite an dem antriebsseitigen Reibelemententräger getragen ist, oder/und dass die Auslenkungsmassenanordnung durch die Trägeranordnung an ihrer dem Getriebe zugewandten axialen Seite bezüglich des Getriebes wenigstens radial abgestützt ist.

Um den Antrieb der im Allgemeinen in einem Getriebe vorgesehenen Fluidpumpe zu realisieren, kann das Pumpenantriebselement zur Kopplung mit der in dem Getriebe vorgesehenen Fluidpumpe in ein Getriebegehäuse eingreifend und bezüglich des Getriebegehäuses wenigstens radial abgestützt positioniert sein.

Die Drehmomentübertragungsanordnung des erfindungsgemäßen Antriebssystems kann beispielsweise dadurch in einfacher Weise axial abgestützt werden, dass das Pumpenantriebselement oder/und ein dieses aufweisendes Trägerelement bezüglich des Getriebegehäuses axial abgestützt ist.

Ferner kann der abtriebsseitige Reibelemententräger bezüglich der Getriebeeingangswelle oder einer die Getriebeeingangswelle umgebenden Stützhohlwelle axial abgestützt sein. Der antriebsseitige Reibelemententräger kann bezüglich der Getriebeeingangswelle oder/und des abtriebsseitigen Reibelemententrägers radial abgestützt sein. Dabei kann der antriebsseitige Reibelemententräger mit einer Antriebsnabe verbunden sein, und die Antriebsnabe kann an der Getriebeeingangswelle radial gelagert sein oder/und kann an einer mit dem abtriebsseitigen Reibelemententräger verbundenen Abtriebsnabe axial oder/und radial gelagert sein.

Die Erfindung wird nachfolgend mit Bezug auf die beiliegenden Figuren detailliert beschrieben. Es zeigt:
- Fig. 1: eine Teil-Längsschnittansicht eines eine Drehmomentübertragungsanordnung im Drehmomentübertragungsweg zwischen einem Antriebsaggregat und einem Getriebe umfassenden Antriebssystems;
- Fig. 2: eine der Fig. 1 entsprechende Ansicht einer alternativen Ausgestaltungsart;
- Fig. 3: eine weitere der Fig. 1 entsprechende Ansicht einer alternativen Ausgestaltungsart;
- Fig. 4: eine Längsschnittansicht eines Lagerelements;
- Fig. 5: eine perspektivische Ansicht des Lagerelements der Fig. 4;
- Fig. 6: eine Axialansicht des Lagerelements der Fig. 4;
- Fig. 7: eine weitere der Fig. 1 entsprechende Ansicht einer alternativen Ausgestaltungsart;
- Fig. 8: eine weitere der Fig. 1 entsprechende Ansicht einer alternativen Ausgestaltungsart;
- Fig. 9: eine weitere der Fig. 1 entsprechende Ansicht einer alternativen Ausgestaltungsart.

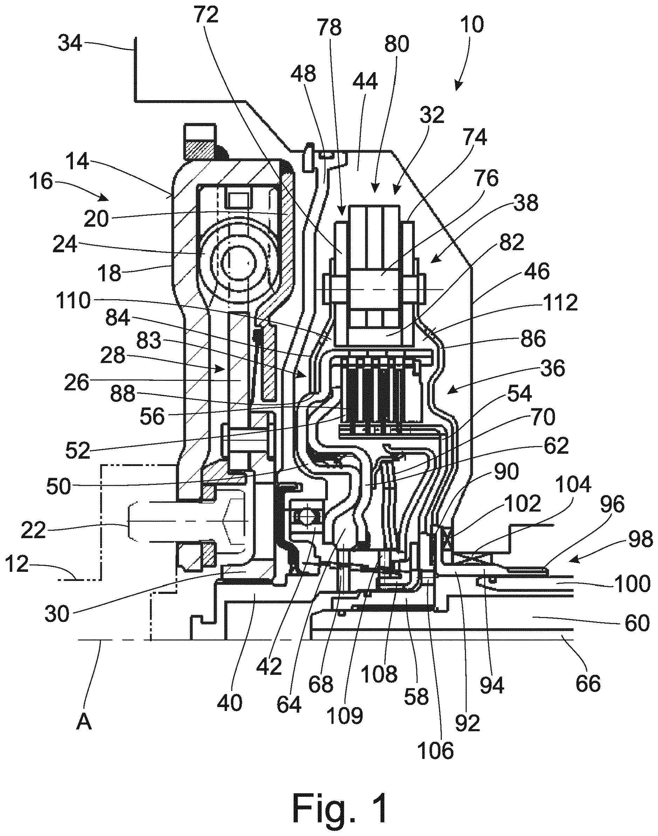

Die Fig. 1 zeigt einen Teilbereich eines allgemein mit 10 bezeichneten Antriebssystems für ein Fahrzeug. Das Antriebssystem 10 umfasst ein Antriebsaggregat, von welchem in Fig. 1 prinzipartig die Antriebswelle 12, beispielsweise die Kurbelwelle einer Brennkraftmaschine, dargestellt ist. Mit der Antriebswelle 12 zur gemeinsamen Drehung um eine Drehachse A gekoppelt ist eine Primärseite 14 einer Torsionsschwingungsdämpferanordnung 16. Die Primärseite 14 umfasst zwei Deckscheibenelemente 18, 20, von welchen das Deckscheibenelement 18 durch Schraubbolzen 22 an der Antriebswelle 12 festgelegt ist. An den beiden Deckscheibenelementen 18, 20 stützen sich die Dämpferfedern 24 der Torsionsschwingungsdämpferanordnung 16 in Umfangsrichtung um die Drehachse A ab. Axial zwischen den beiden Deckscheibenelementen 18, 20 ist ein Zentralscheibenelement 26 einer Sekundärseite 28 der Torsionsschwingungsdämpferanordnung angeordnet und in seinem radial äußeren Bereich gleichermaßen in Umfangsrichtung an den Dämpferfedern 24 abgestützt. In seinem radial inneren Bereich ist das Zentralscheibenelement 26 beispielsweise durch Vernietung mit einem Übertragungselement 30 verbunden. Dieses Übertragungselement 30 weist in seinem radial inneren Bereich eine Verzahnung auf, über welche die Torsionsschwingungsdämpferanordnung 16 mit einer allgemein mit 32 bezeichneten Drehmomentübertragungsbaugruppe gekoppelt ist.

Die axial auf die Torsionsschwingungsdämpferanordnung 16 folgende und zwischen dem Antriebsaggregat bzw. der Torsionsschwingungsdämpferanordnung 16 und einem allgemein mit 34 bezeichneten Getriebe angeordnete Drehmomentübertragungsanordnung 32 umfasst eine nasslaufende Kupplungsanordnung 36 und radial außerhalb der nasslaufenden Kupplungsanordnung 36 und mit dieser im Wesentlichen axial sich überlappend eine Auslenkungsmassenanordnung 38. Eine Antriebsnabe 40 der nasslaufenden Kupplungsanordnung 36 ist durch Verzahnungseingriff an das Übertragungselement 30 angekoppelt und über ein Lager 42 bezüglich eines einen Nassraum 44 zusammen mit einem Getriebegehäuse 16 begrenzenden Deckels 48 gelagert. Ein antriebsseitiger Reibelemententräger 50, allgemein auch als Außenlamellenträger bezeichnet, ist in seinem radial inneren Bereich beispielsweise durch Verschweißung mit der Antriebsnabe 40 fest verbunden und trägt in seinem radial äußeren, im Wesentlichen axial sich erstreckenden Bereich eine Mehrzahl von in Richtung der Drehachse A aufeinanderfolgenden antriebsseitigen Reibelementen 52, allgemein auch als Außenlamellen bezeichnet.

Ein abtriebsseitiger Reibelemententräger 54, allgemein auch als Innenlamellenträger bezeichnet, trägt in seinem radial äußeren, im Wesentlichen axial sich erstreckenden Bereich eine Mehrzahl von abtriebsseitigen Reibelementen 56, allgemein als Innenlamellen bezeichnet, wobei antriebsseitige Reibelemente 52 und abtriebsseitige Reibelemente 56 in Richtung der Drehachse A vorzugsweise alternierend angeordnet sind. In seinem radial inneren Bereich ist der abtriebsseitige Reibelemententräger 54 mit einer Abtriebsnabe 58 beispielsweise durch Verschweißung fest verbunden. Die Abtriebsnabe 58 steht im Verzahnungseingriff mit einer aus dem Getriebegehäuse 46 axial hervorstehenden Getriebeeingangswelle 60.

Axial neben dem antriebsseitigen Reibelemententräger 50 ist ein Kupplungskolben 62 angeordnet. Dieser begrenzt zusammen mit dem antriebsseitigen Reibelemententräger 50 einen Druckfluidraum 64, in welchem über eine zentrale Öffnung 66 der Getriebeeingangswelle 60 und in der Antriebsnabe 40 ausgebildete Öffnungen 68 Druckfluid eingeleitet werden kann, um den Kupplungskolben 62 mit seinem radial äußeren Bereich in Richtung auf die antriebsseitigen Reibelemente 52 bzw. die abtriebsseitigen Reibelemente 56 zu zu pressen und diese somit in Reibeingriff miteinander zu bringen. Durch radial innerhalb des abtriebsseitigen Reibelemententrägers 54 positionierte Vorspannfedern 70 wird der Kupplungskolben 62 in Richtung von den antriebsseitigen Reibelementen 52 bzw. den abtriebsseitigen Reibelementen 56 weg, also in Richtung Auskuppeln, vorgespannt.

Die radial außerhalb der nasslaufenden Kupplungsanordnung 36 angeordnete Auslenkungsmassenanordnung 38, welche allgemein auch als drehzahladaptiver Tilger bezeichnet wird, umfasst zwei in axialem Abstand zueinander angeordnete, und vorzugsweise ringscheibenartig ausgebildete, beispielsweise aus Blechmaterial gebildete Auslenkungsmassenträgerelemente 72, 74. Diese sind durch eine Mehrzahl von in Umfangsrichtung aufeinanderfolgend angeordneten Distanzelementen 76 miteinander fest verbunden. Die Auslenkungsmassenträgerelemente 72, 74 stellen im Wesentlichen einen Auslenkungsmassenträger 78 der Auslenkungsmassenanordnung 38 bereit.

Axial zwischen den beiden Auslenkungsmassenträgerelementen 72, 74 sind in Umfangsrichtung aufeinanderfolgend, vorzugsweise in Bereichen zwischen jeweils zwei Distanzelementen 76, Auslenkungsmassen 80 angeordnet. Jede Auslenkungsmasse 80 kann beispielsweise aus mehreren im Wesentlichen baugleichen und beispielsweise miteinander verbundenen Scheiben aufgebaut sein. Die Auslenkungsmassen 80 sind beispielsweise jeweils über zwei in Fig. 1 nicht dargestellte Führungsbolzen an den Auslenkungsmassenträgerelementen 72, 74 getragen bzw. geführt. Die Führungsbolzen durchsetzen in den Auslenkungsmassen 80 dafür vorgesehene Öffnungen und greifen in in den Auslenkungsmassenträgerelementen 72, 74 dafür vorgesehene Öffnungen ein. Die in den Auslenkungsmassenträgerelementen 72, 74 ausgebildeten Öffnungen weisen eine im Wesentlichen nierenförmige bzw. U-förmige Gestalt mit radial außen liegendem Scheitelbereich auf bzw. stellen entsprechend geformte und die Führungsbolzen nach radial außen abstützende Führungsbahnen bereit. In entsprechender Weise sind die von den Führungsbolzen durchsetzten Öffnung in den Auslenkungsmassen 80 nierenförmig bzw. U-förmig geformt und stellen Führungsbahnen für die Führungsbolzen bereit, welche einen radial innen liegenden Scheitelbereich aufweisen. die Führungsbolzen können sich in den diese aufnehmenden Öffnungen der Auslenkungsmassenträgerelemente 72, 74 bzw. der Auslenkungsmassen 80 entlang der dort jeweils vorgesehenen Führungsbahnen bewegen.

Im Rotationsbetrieb und unter Fliehkraftbelastung der Auslenkungsmassen 80 verlagern diese sich in maximalem Ausmaß nach radial außen und bilden somit eine Grund-Relativpositionierung bezüglich des Auslenkungsmassenträgers 78 ein, in welcher die Führungsbolzen in den radial außen positionierten Scheitelbereichen der in den Auslenkungsmassenträgerelementen 72, 74 vorgesehenen Führungsbahnen positioniert sind und in den radial innen positionierten Scheitelbereichen der in den Auslenkungsmassen 80 vorgesehenen Führungsbahnen positioniert sind, so dass auch die Auslenkungsmassen 80 in maximalem Ausmaß nach radial außen verlagert sind. Bei Auftreten von Drehschwingungen und die Auslenkungsmassen 80 in Umfangsrichtung beaufschlagenden Trägheitskräften bewegen sich die Führungsbolzen ausgehend von diesen Scheitelbereichen entlang der jeweiligen Führungsbahnen, wodurch zwangsweise die Auslenkungsmassen 80 aus ihrer Grund-Relativlage bezüglich des Auslenkungsmassenträgers 78 ausgelenkt und dabei nach radial innen bewegt werden. Dabei nehmen die Auslenkungsmassen 80 potentielle Energie auf und können somit bei Auftreten von Drehschwingungen eine diesen entgegenwirkende Schwingung im Fliehpotential durchführen. Um dann, wenn das System in Ruhe ist, also nicht um die Drehachse A rotiert und somit die oben positionierten Auslenkungsmassen 80 nach unten, also nach radial innen fallen, ein Anschlagen derselben am antriebsseitigen Reibelemententräger 50 zu verhindern, kann im radial inneren Bereich der Auslenkungsmassenträgerelementen 72, 74 axial zwischen diesen ein Abstützring 82 vorgesehen sein, auf welchem die Auslenkungsmassen 80 aufliegen können.

Die Auslenkungsmassenanordnung 38 ist durch eine allgemein mit 84 bezeichnete Trägeranordnung getragen. In dem in Fig. 1 dargestellten Ausgestaltungsbeispiel umfasst die Trägeranordnung 83 beidseits der Auslenkungsmassenanordnung 38 jeweils ein scheibenartiges Trägerelement 84, 86. Das an der dem Antriebsaggregat bzw. der Torsionsschwingungsdämpferanordnung 16 zugewandten axialen Seite der Auslenkungsmassenanordnung 38 vorgesehene Trägerelement 84, ist in seinem radial äußeren Bereich beispielsweise durch die nietbolzenartig ausgebildeten Distanzelemente 76 mit dem an dieser axialen Seite auch positionierten Auslenkungsmassenträgerelement 72 und somit der Auslenkungsmassenanordnung 38 gekoppelt, im dargestellten Beispiel direkt fest verbunden. In seinem radial inneren Bereich stützt sich das Trägerelement 84 an einem Schulterbereich 88 des antriebsseitigen Reibelemententrägers 50 radial ab und ist dort mit dem antriebsseitigen Reibelemententräger 50 beispielsweise durch Verschweißung fest verbunden.

Das an der dem Getriebe 34 zugewandten axialen Seite der Auslenkungsmassenanordnung 38 angeordnete Trägerelement 86 ist in seinem radial äußeren Bereich ebenfalls vermittels der Distanzelemente 76 mit dem an dieser axialen Seite positionierten Auslenkungsmassenträgerelement 74 fest verbunden und erstreckt sich nach radial innen weiter, als das an der anderen axialen Seite angeordnete Trägerelement 84. Insbesondere erstreckt sich das Trägerelement 86 bis in den Bereich der Abtriebsnabe 58 und ist dort mit einem nach radial außen greifenden, ringartigen Verbindungsbereich 90 eines allgemein mit 92 bezeichneten Pumpenantriebselements beispielsweise durch Verschweißung verbunden. Das Pumpenantriebselement 92 weist anschließend an den Verbindungsbereich 90 einen im Wesentlichen axial, also rohrartig sich erstreckenden Antriebsbereich 94 auf, der in seinem axial freien Endbereich eine Verzahnungsformation 96 zum Antrieb einer im Inneren des Getriebegehäuses 46 angeordneten Fluidpumpe aufweist. Dabei umgibt der in eine Öffnung 98 des Getriebegehäuses 34 eingreifend positionierte Antriebsbereich 94 des Pumpenantriebselements 92 eine Stützhohlwelle 100 und ist bezüglich dieser über ein Dichtungselement fluiddicht, jedoch drehbar angeschlossen.

Das Pumpenantriebselement 92 ist mit seinem Verbindungsbereich 90 über ein Lager 102, beispielsweise Wälzkörperlager, am Getriebegehäuse 46 axial abgestützt und ist seinem in die Öffnung 98 des Getriebegehäuses 46 eingreifenden Antriebsbereich 94 über ein Lager 104, beispielsweise Wälzkörperlager, radial bezüglich des Getriebegehäuses 46 abgestützt.
Durch die beiden Trägerelemente 84, 86 ist somit die Auslenkungsmassenanordnung 38 an ihren beiden axialen Seiten radial abgestützt und auch in axialer Richtung gehalten. Somit können die auf die Auslenkungsmassenanordnung 32 und insbesondere die Auslenkungsmassen 80 derselben einwirkenden Fliehkräfte nicht zu einer aufgrund unsymmetrischer Abstützung auftretender Verschiebung verschiedener Komponenten derselben in radialer Richtung führen.

Das von der über das Pumpenantriebselement 92 angetriebenen Pumpe zugeführte Fluid kann über einen radialen Zwischenraum zwischen der Stützhohlwelle 100 und der Getriebeeingangswelle 66 und Öffnung 106 in der Abtriebsnabe 58 sowie Aussparungen in einem nachfolgend detaillierter beschriebenen Lagerelement 108, über welches die Antriebsnabe 40 bezüglich der Abtriebsnabe 58 axial bzw. radial abgestützt ist, sowie Öffnungen 109 in der Antriebsnabe 40 nach radial außen in den Bereich der antriebsseitigen Reibelemente 52 bzw. der abtriebsseitigen Reibelemente 56 gelangen. Das Fluid kann diese Reibelemente umströmen und durch Öffnungen 110 bzw. 112 in den Trägerelementen 84, 86 hindurch nach radial außen in den Nassraum 44 gelangen. In einem in Höhenrichtung unteren Bereich des Nassraums 44 kann eine Öffnung vorgesehen sein, durch welche das Fluid, also beispielsweise Öl, aus dem Nassraum 44 wieder abgezogen wird.

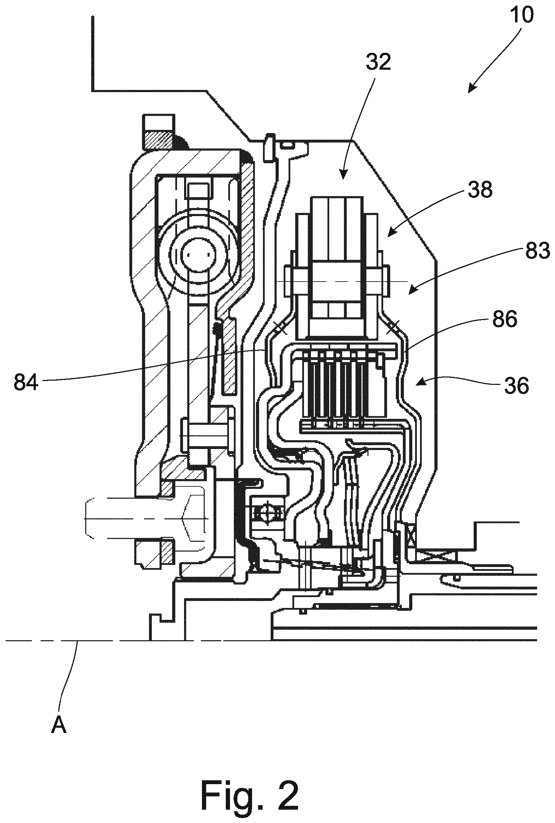

Die Fig. 2 zeigt eine abgewandelte Ausgestaltungsart eines Antriebssystems bzw. der Drehmomentübertragungsanordnung 32 desselben. Der wesentliche Aufbau entspricht dem vorangehend Beschrieben, so dass auf die diesbezüglichen Ausführungen verwiesen werden kann.
Man erkennt in Fig. 2, dass die beiden Trägerelemente 84, 86 in demjenigen radialen Bereich, in welchem sie sich gemeinsam erstrecken, zueinander formidentisch sind. Dies ermöglicht es, beide Trägerelemente 84, 86 mit dem gleichen Formgebungswerkzeug durch Umformen eines Blechrohlings herzustellen, um beispielsweise bei dem Trägerelement 84 einen größeren Bereich am radial inneren Ende desselben abzutrennen.

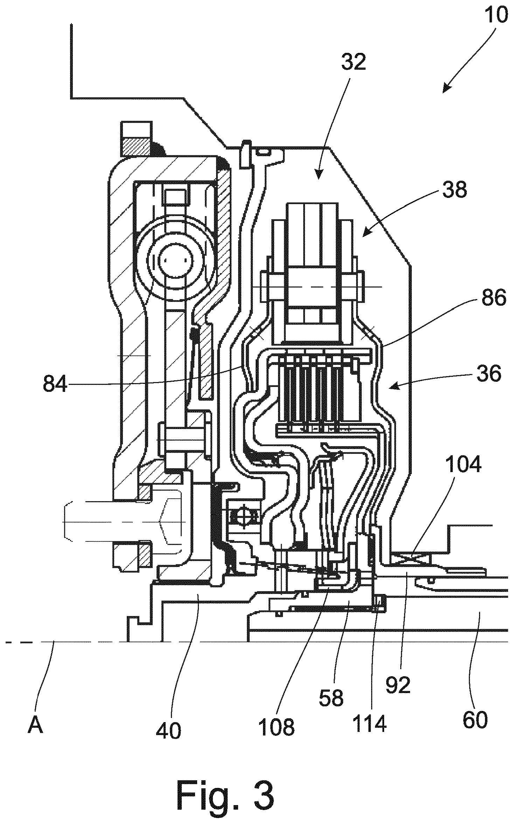

Eine weitere Abwandlung ist in Fig. 3 gezeigt. Man erkennt, dass in dieser Ausgestaltungsform das Pumpenantriebselement 92 bezüglich des Getriebegehäuses 46 nur radial über das Lager 104 abgestützt ist. Die axiale Positionierung der Auslenkungsmassenanordnung 38 erfolgt im Wesentlichen über das mit dem antriebsseitigen Reibelemententräger 50 fest verbundene Trägerelement 84. Die axiale Abstützung der Abtriebsnabe 58 und der über das Lagerelement 108 an dieser axial bzw. radial abgestützten Abtriebsnabe 40 erfolgt durch ein Axialabstützelement 114, bzw. Wellfeder, bezüglich der Getriebeeingangswelle 60. Das Axialabstützelement 114 greift dabei beispielsweise in eine Umfangsnut der Getriebeeingangswelle 60 ein und stützt sich axial in Richtung vom Antriebsaggregat weg an der Getriebeeingangswelle 60 ab.

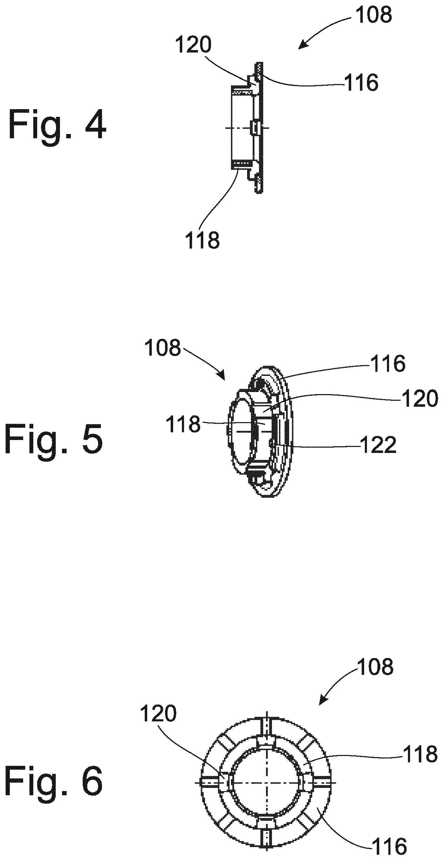

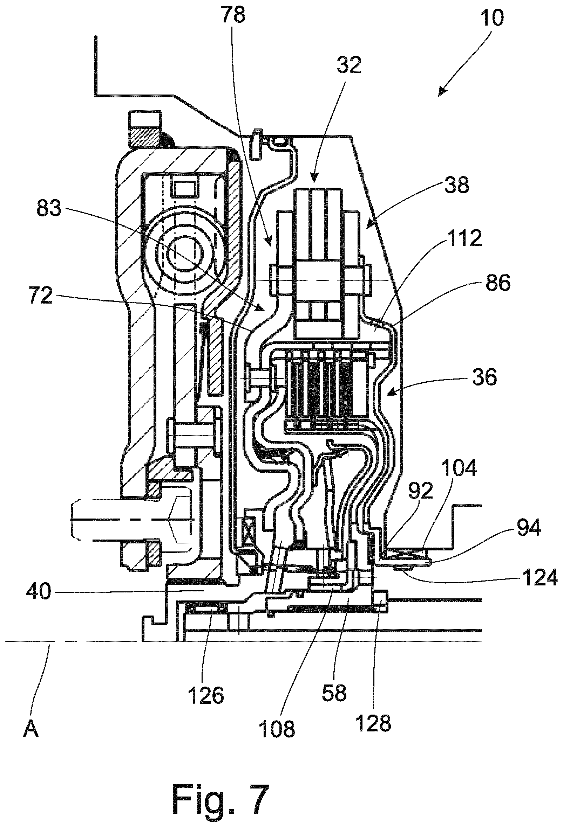

Das die Antriebsnabe 40 bezüglich der Abtriebsnabe 58 axial bzw. radial abstützende Lagerelement 108 ist in den Fig. 4 bis 5 deutlicher gezeigt. Dieses weist einen im Wesentlichen radial sich erstreckenden Axialabstützbereich 116 und einen im Wesentlichen axial sich erstreckenden Radialabstützbereich 118 auf. Über sowohl im Axialabstützbereich 116, als auch im Radialabstützbereich 118 sich erstreckende Aussparungen 120 kann das von der Fluidpumpe geförderte Fluid durch das Lagerelement 108 hindurchtreten und somit in den Bereich der Reibelemente 52, 56 gelangen. Das Lagerelement 108 ist als Gleitlagerelement ausgebildet und weist eine Mehrzahl von Drehsicherungsvorsprüngen 122 auf, welche in zugeordnete Aussparungen der Antriebsnabe 40 eingreifend positioniert werden, so dass das Lagerelement 108 grundsätzlich mit der Antriebsnabe 40 drehfest ist und somit bei ausgerückter nasslaufender Kupplungsanordnung 36 bezüglich der Abtriebsnabe 58 rotiert.
Eine weitere Abwandlung eines Antriebssystems 10 ist in Fig. 7 gezeigt. Man erkennt, dass bei dieser Ausgestaltung die Trägeranordnung 83 nur an der vom Antriebsaggregat abgewandten bzw. dem Getriebe 34 zugewandten axialen Seite ein separates Trägerelement 86 umfasst. An der dem Antriebsaggregat zugewandten axialen Seite ist das Auslenkungsmassenträgerelement 72 weiter nach radial innen gezogen und bildet somit ein Trägerelement für die Trägeranordnung 83. In seinem radial inneren Bereich ist das aus Blechmaterial geformte Auslenkungsmassenträgerelement 72 beispielsweise durch Vernietung mit dem antriebsseitigen Reibelemententräger 50 fest verbunden. Ferner weist bei der in Fig. 7 dargestellten Ausgestaltungsform das Pumpenantriebselement 92 in seinem Antriebsbereich 94 eine Steckverzahnung 124 auf, über welche eine Antriebsverbindung mit der Fluidpumpe hergestellt werden kann.

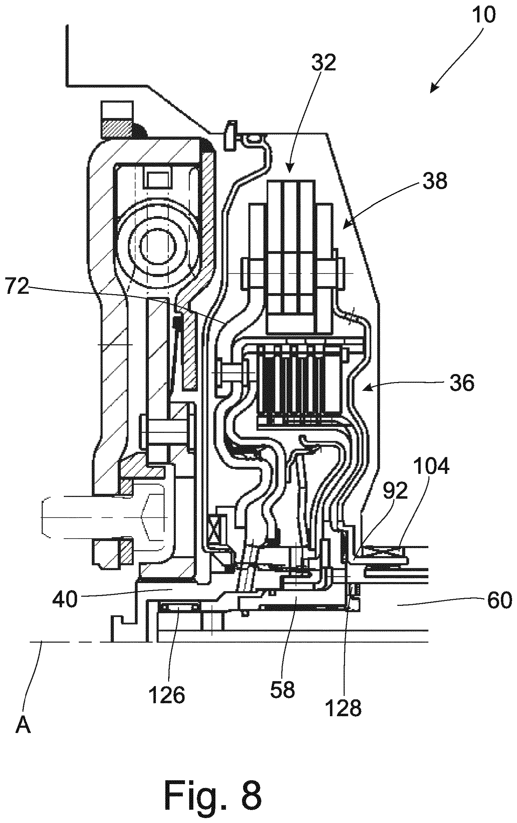

Bei der in Fig. 8 dargestellten Ausgestaltungsform bildet, ähnlich wie in der vorangehend beschriebenen Ausgestaltungsform, das Auslenkungsmassenträgerelement 72 gleichzeitig auch ein Trägerelement der Trägeranordnung 83 und ist mit seinem radial inneren Bereich am antriebsseitigen Reibelemententräger 50 festgelegt. Bei dieser Ausgestaltungsform eines Antriebssystems 10 ist die Abtriebsnabe 40 vermittels eines Lagers 126, beispielsweise ein Gleitlager, auf dem axialen Endbereich der Getriebeeingangswelle 60 radial gelagert. Die Antriebsnabe 40 ist ferner über das Lagerelement 108 bezüglich der Abtriebsnabe 58 axial bzw. radial abgestützt, welche wiederum über ein Lager 128, beispielsweise Gleitlager, axial bezüglich der Getriebeeingangswelle 60 abgestützt ist. Das Pumpenantriebselement 92 ist auch bei dieser Ausgestaltungsform nur über das Lager 104 radial bezüglich des Getriebegehäuses 46 abgestützt.

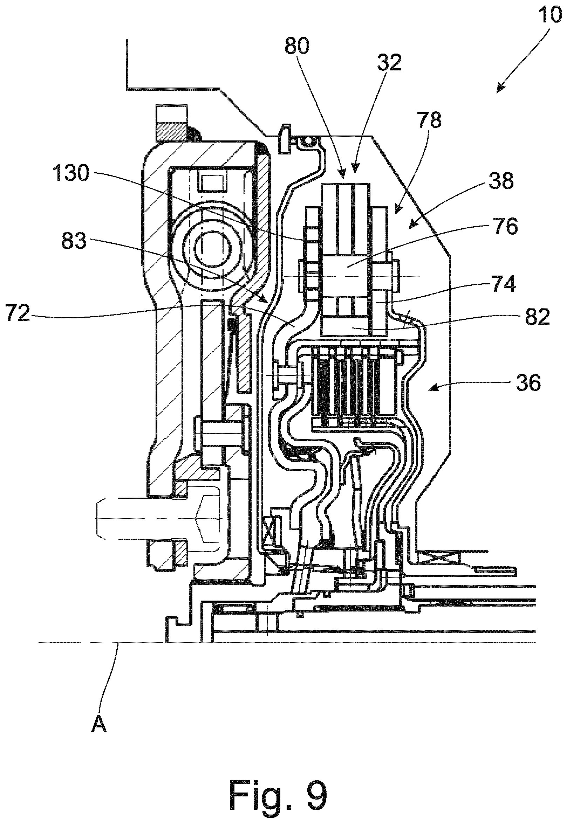

Die Fig. 9 zeigt eine Ausgestaltungsform eines Antriebssystems 10, bei welcher an dem dem Antriebsaggregat zugewandten und als Trägerelement wirksamen Auslenkungsmassenträgerelement 72 in Zuordnung zu den Auslenkungsmassen 80 der Auslenkungsmassenanordnung 38 jeweils in zugeordneten Aussparungen des Auslenkungsmassenträgerelements 72 Auslenkungsbahnelemente 130 vorgesehen sind. Da bei dieser Ausgestaltungsform das Auslenkungsmassenträgerelement 72 zur Anbindung an den antriebsseitigen Reibelemententräger 50 in eine geeignete Form gebracht werden muss, ist es vorteilhaft, dieses aus leichter verformbarem, beispielsweise dünnerem Blechmaterial aufzubauen. Um jedoch im Bereich der radialen Abstützung der Auslenkungsmassen eine ausreichend hohe Verschleißfestigkeit vorzusehen, sind die Auslenkungsbahnelemente aus festerem Material, beispielsweise härterem oder gehärtetem Blechmaterial oder Metallmaterial, bereitgestellt, an welchem dann die die Führungsbolzen für die Auslenkungsmassen 80 führenden Führungsbahnen vorgesehen sind.

Es sei abschließend darauf hingewiesen, dass selbstverständlich die vorangehend mit Bezug auf die verschiedenen Ausgestaltungsformen beschriebenen Abwandlungen bzw. Detailaspekte auch beliebig miteinander kombiniert werden können. Ferner können die verschiedenen Systembereiche, wie z. B. die Torsionsschwingungsdämpferanordnung 16, die nasslaufende Kupplungsanordnung bzw. die Auslenkungsmassenanordnung 38 unter Beibehalt ihrer grundsätzlichen Funktionsprinzipien konstruktiv anders ausgeführt sein. Beispielsweise könnte die nasslaufende Kupplungsanordnung 36 als Doppelkupplung ausgebildet sein.

### Bezugszeichen

- 10: Antriebssystem
- 12: Antriebswelle
- 14: Primärseite
- 16: Torsionsschwingungsdämpferanordnung
- 18: Deckscheibenelement
- 20: Deckscheibenelement
- 22: Schraubbolzen
- 24: Dämpferfeder
- 26: Zentralscheibenelement
- 28: Sekundärseite
- 30: Übertragungselement
- 32: Drehmomentübertragungsanordnung
- 34: Getriebe
- 36: nasslaufende Kupplungsanordnung
- 38: Auslenkungsmassenanordnung
- 40: Antriebsnabe
- 42: Lager
- 44: Nassraum
- 46: Getriebegehäuse
- 48: Deckel
- 50: antriebsseitiger Reibelemententräger
- 52: antriebsseitiges Reibelement
- 54: abtriebsseitiger Reibelemententräger
- 56: abtriebsseitiges Reibelement
- 58: Abtriebsnabe
- 60: Getriebeeingangswelle
- 62: Kupplungskolben
- 64: Druckfluidraum
- 66: Öffnung
- 68: Öffnung
- 70: Vorspannfeder
- 72: Auslenkungsmassenträgerelement
- 74: Auslenkungsmassenträgerelement
- 76: Distanzelement
- 78: Auslenkungsmassenträger
- 80: Auslenkungsmasse
- 82: Abstützring
- 83: Trägeranordnung
- 84: Trägerelement
- 86: Trägerelement
- 88: Schulterbereich
- 90: Verbindungsbereich
- 92: Pumpenantriebselement
- 94: Antriebsbereich
- 96: Verzahnungsformation
- 98: Öffnung
- 100: Stützhohlwelle
- 102: Lager
- 104: Lager
- 106: Öffnung
- 108: Lagerelement
- 109: Öffnung
- 110: Öffnung
- 112: Öffnung
- 114: Axialabstützelement
- 116: Axialabstützbereich
- 118: Radialabstützbereich
- 120: Aussparung
- 122: Drehsicherungsvorsprung
- 124: Steckverzahnung
- 126: Lager
- 128: Lager
- 130: Auslenkungsbahnelement
- A: Drehachse

## Patentansprüche

1. Drehmomentübertragungsanordnung für den Antriebsstrang eines Fahrzeugs, umfassend:
- eine nasslaufende Kupplungsanordnung (36) mit einem antriebsseitigen Reibelemententräger (50) und einer Mehrzahl von mit diesem zur gemeinsamen Drehung um eine Drehachse (A) gekoppelten antriebsseitigen Reibelementen (52) und mit einem abtriebsseitigen Reibelemententräger (54) und einer Mehrzahl von mit diesem zur gemeinsamen Drehung um die Drehachse (A) gekoppelten und mit den antriebsseitigen Reibelementen (52) in Reibeingriff bringbaren abtriebsseitigen Reibelementen (56),
- eine mit dem antriebsseitigen Reibelemententräger (50) zur gemeinsamen Drehung um die Drehachse (A) gekoppelte Auslenkungsmassenanordnung (38) mit einem Auslenkungsmassenträger (78) und wenigstens einer an dem Auslenkungsmassenträger (78) bezüglich diesem aus einer Grund-Relativlage auslenkbar getragenen Auslenkungsmasse (80), wobei bei Auslenkung der wenigstens einen Auslenkungsmasse (80) aus der Grund-Relativlage ein Radialabstand der wenigstens einen Auslenkungsmasse (80) bezüglich der Drehachse (A) sich ändert,
wobei die Auslenkungsmassenanordnung (38) die Kupplungsanordnung (36) radial außen umgebend und in axialer Richtung wenigstens bereichsweise überlappend angeordnet ist und an ihren beiden axialen Seiten vermittels einer Trägeranordnung (83) radial abgestützt ist,
**dadurch gekennzeichnet, dass** der Auslenkungsmassenträger (78) axial beidseits der wenigstens einen Auslenkungsmasse (80) jeweils ein scheibenartiges Auslenkungsmassenträgerelement (72, 74) umfasst, und dass die Trägeranordnung (83) an jeder axialen Seite der Auslenkungsmassenanordnung (38) ein mit dem an dieser axialen Seite der Auslenkungsmassenanordnung (38) vorgesehenen Auslenkungsmassenträgerelement (72, 74) verbundenes scheibenartiges Trägerelement (84, 86) umfasst, und eines der Trägerelemente (84, 86) in seinem radial inneren Endbereich mit dem antriebsseitigen Reibelemententräger (50) durch Verschweißung verbunden ist und dass das andere Trägerelement (86) sich über den radial inneren Endbereich des einen Trägerelements (84) hinaus weiter nach radial innen erstreckt.

2. Drehmomentübertragungsanordnung nach Anspruch 1, **dadurch gekennzeichnet, dass** das andere Trägerelement (86) in seinem das eine Trägerelement (84) radial überdeckenden Erstreckungsbereich im Wesentlichen formidentisch zu dem einen Trägerelement (84) ausgebildet ist.

3. Drehmomentübertragungsanordnung nach einem der Ansprüche 1 bis 2, **dadurch gekennzeichnet, dass** an einem Trägerelement (86) ein mit einer Fluidpumpe in Antriebsverbindung bringbares Pumpenantriebselement (92) vorgesehen ist.

4. Drehmomentübertragungsanordnung nach Anspruch 1 und Anspruch 3, **dadurch gekennzeichnet, dass** das Pumpenantriebselement (92) an einem radial inneren Endbereich des anderen Trägerelements (86) vorgesehen ist.

5. Drehmomentübertragungsanordnung nach einem der Ansprüche 1 bis 4, **dadurch gekennzeichnet, dass** die beiden Auslenkungsmassenträgerelemente (72, 74) durch eine Mehrzahl von diese in vorbestimmtem axialen Abstand zueinander haltenden Distanzelementen (76) miteinander verbunden sind, und dass an wenigstens einer axialen Seite der Auslenkungsmassenanordnung (38) ein Trägerelement (84, 86) durch wenigstens ein Distanzelement (76), vorzugsweise mehrere Distanzelemente (76), mit dem an dieser axialen Seite vorgesehenen Auslenkungsmassenträgerelement (72, 74) verbunden ist.

6. Antriebssystem, umfassend ein Antriebsaggregat und eine Drehmomentübertragungsanordnung (32) nach einem der vorangehenden Ansprüche, wobei der antriebsseitige Reibelemententräger (50) vorzugsweise vermittels einer Torsionsschwingungsdämpferanordnung (16) mit einer Antriebswelle (12) des Antriebsaggregats zur gemeinsamen Drehung gekoppelt ist und der abtriebsseitige Reibelemententräger (54) mit einer Getriebeeingangswelle (60) eines Getriebes (34) zur gemeinsamen Drehung gekoppelt ist, wobei die Drehmomentübertragungsanordnung (32) in einem im Wesentlichen fluiddicht abgeschlossenen Nassraum (44) angeordnet ist.

7. Antriebssystem nach Anspruch 6, **dadurch gekennzeichnet, dass** die Auslenkungsmassenanordnung (38) durch die Trägeranordnung (83) an ihrer dem Antriebsaggregat zugewandten axialen Seite an dem antriebsseitigen Reibelemententräger (50) getragen ist, oder/und dass die Auslenkungsmassenanordnung (38) durch die Trägeranordnung (83) an ihrer dem Getriebe (34) zugewandten axialen Seite bezüglich des Getriebes (34) wenigstens radial abgestützt ist.

8. Antriebssystem nach Anspruch 3 und Anspruch 7, **dadurch gekennzeichnet, dass** das Pumpenantriebselement (92) zur Kopplung mit der in dem Getriebe (34) vorgesehenen Fluidpumpe in ein Getriebegehäuse (46) eingreifend und bezüglich des Getriebegehäuses (46) wenigstens radial abgestützt positioniert ist.

9. Antriebssystem nach Anspruch 8, **dadurch gekennzeichnet, dass** das Pumpenantriebselement (92) oder/und ein dieses aufweisendes Trägerelement (86) bezüglich des Getriebegehäuses (46) axial abgestützt ist.

10. Antriebssystem nach einem der Ansprüche 6 bis 8, **dadurch gekennzeichnet, dass** der abtriebsseitige Reibelemententräger (58) bezüglich der Getriebeeingangswelle (60) oder einer die Getriebeeingangswelle (60) umgebenden Stützhohlwelle (106) axial abgestützt ist.

11. Antriebssystem nach einem der Ansprüche 6 bis 8, **dadurch gekennzeichnet, dass** der antriebsseitige Reibelemententräger (50) bezüglich der Getriebeeingangswelle (60) oder/und des abtriebsseitigen Reibelemententrägers (54) radial abgestützt ist.

12. Antriebssystem nach Anspruch 11, **dadurch gekennzeichnet, dass** der antriebsseitige Reibelemententräger (50) mit einer Antriebsnabe (40) verbunden ist und die Antriebsnabe (40) an der Getriebeeingangswelle (60) radial gelagert ist oder/und an einer mit dem abtriebsseitigen Reibelemententräger (54) verbundenen Abtriebsnabe (58) axial oder/und radial gelagert ist.

## Claims

1. Torque transmission arrangement for the drive train of a vehicle, comprising:
- a wet clutch arrangement (36) with a drive-side friction element carrier (50) and a plurality of drive-side friction elements (52) which are coupled to the said drive-side friction element carrier (50) for common rotation about a rotational axis (A), and with an output-side friction element carrier (54) and a plurality of output-side friction elements (56) which are coupled to the said output-side friction element carrier (54) for common rotation about the rotational axis (A) and can be brought into frictional engagement with the drive-side friction elements (52),
- a deflection mass arrangement (38) which is coupled to the drive-side friction element carrier (50) for common rotation about the rotational axis (A) and has a deflection mass carrier (78) and at least one deflection mass (80) which is supported on the deflection mass carrier (78) such that it can be deflected out of its basic relative position with regard to the latter, a radial spacing of the at least one deflection mass (80) with regard to the rotational axis (A) changing in the case of deflection of the at least one deflection mass (80) out of the basic relative position,
the deflection mass arrangement (38) being arranged so as to surround the clutch arrangement (36) radially on the outside and to overlap it in the axial direction at least in regions, and being supported radially on its two axial sides by means of a carrier arrangement (83),
**characterized in that** the deflection mass carrier (78) comprises in each case one disc-like deflection mass carrier element (72, 74) axially on both sides of the at least one deflection mass (80), and **in that**, on each axial side of the deflection mass arrangement (38), the carrier arrangement (83) comprises a disc-like carrier element (84, 86) which is connected to the deflection mass carrier element (72, 74) which is provided on the said axial side of the deflection mass arrangement (38), and one of the carrier elements (84, 86) is connected in its radially inner end region to the drive-side friction element carrier (50) by way of welding, and **in that** the other carrier element (86) extends further radially inwards beyond the radially inner end region of the one carrier element (84).

2. Torque transmission arrangement according to Claim 1, **characterized in that**, in its extent region which radially covers the one carrier element (84), the other carrier element (86) is of substantially identically shaped configuration to the one carrier element (84).

3. Torque transmission arrangement according to either of Claims 1 and 2, **characterized in that** a pump drive element (92) which can be brought into a drive connection with a fluid pump is provided on a carrier element (86).

4. Torque transmission arrangement according to Claim 1 and Claim 3, **characterized in that** the pump drive element (92) is provided on a radially inner end region of the other carrier element (86).

5. Torque transmission arrangement according to one of Claims 1 to 4, **characterized in that** the two deflection mass carrier elements (72, 74) are connected to one another by way of a plurality of spacer elements (76) which hold them at a predefined axial spacing from one another, and **in that**, on at least one axial side of the deflection mass arrangement (38), a carrier element (84, 86) is connected by way of at least one spacer element (76), preferably a plurality of spacer elements (76), to the deflection mass carrier element (72, 74) which is provided on the said axial side.

6. Drive system, comprising a drive unit and a torque transmission arrangement (32) according to one of the preceding claims, the drive-side friction element carrier (50) preferably being coupled by means of a torsional vibration damper arrangement (16) to a drive shaft (12) of the drive unit for common rotation, and the output-side friction element carrier (54) being coupled to a transmission input shaft (60) of a transmission (34) for common rotation, the torque transmission arrangement (32) being arranged in a wet space (44) which is closed in a substantially fluid-tight manner.

7. Drive system according to Claim 6, **characterized in that** the deflection mass arrangement (38) is held on the drive-side friction element carrier (50) by way of the carrier arrangement (83) on its axial side which faces the drive unit, and/or **in that** the deflection mass arrangement (38) is supported at least radially with regard to the transmission (34) by way of the carrier arrangement (83) on its axial side which faces the transmission (34).

8. Drive system according to Claim 3 and Claim 7, **characterized in that** the pump drive element (92) is positioned so as to engage into a transmission housing (46) for coupling to the fluid pump which is provided in the transmission (34) and so as to be supported at least radially with regard to the transmission housing (46).

9. Drive system according to Claim 8, **characterized in that** the pump drive element (92) and/or a carrier element (86) which has the said pump drive element (92) is/are supported axially with regard to the transmission housing (46) .

10. Drive system according to one of Claims 6 to 8, **characterized in that** the output-side friction element carrier (58) is supported axially with regard to the transmission input shaft (60) or a hollow supporting shaft (106) which surrounds the transmission input shaft (60) .

11. Drive system according to one of Claims 6 to 8, **characterized in that** the drive-side friction element carrier (50) is supported radially with regard to the transmission input shaft (60) and/or the output-side friction element carrier (54).

12. Drive system according to Claim 11, **characterized in that** the drive-side friction element carrier (50) is connected to a drive hub (40), and the drive hub (40) is mounted radially on the transmission input shaft (60), and/or is mounted axially and/or radially on an output hub (58) which is connected to the output-side friction element carrier (54).

## Revendications

1. Ensemble de transmission de couple pour la chaîne cinématique d'un véhicule, comprenant :
- un ensemble d'embrayage à fonctionnement lubrifié (36) doté d'un support d'éléments de friction côté entraînement (50) et d'une pluralité d'éléments de friction côté entraînement (52) couplés à celui-ci pour une rotation commune autour d'un axe de rotation (A), et doté d'un support d'éléments de friction côté entraîné (54) et d'une pluralité d'éléments de friction côté entraîné (56) couplés à celui-ci pour une rotation commune autour de l'axe de rotation (A) et pouvant être mis en prise par friction avec les éléments de friction côté entraînement (52),
- un ensemble de masse de déviation (38) couplé au support d'éléments de friction côté entraînement (50) pour une rotation commune autour de l'axe de rotation (A), doté d'un support de masse de déviation (78) et d'au moins une masse de déviation (80) portée sur le support de masse de déviation (78) de manière à pouvoir dévier d'une position relative de base par rapport à celui-ci, dans lequel, en cas de déviation de ladite au moins une masse de déviation (80) de la position relative de base, une distance radiale de ladite au moins une masse de déviation (80) par rapport à l'axe de rotation (A) varie,
dans lequel l'ensemble de masse de déviation (38) est disposé en entourant l'ensemble d'embrayage (36) radialement à l'extérieur et en le chevauchant au moins par endroits dans la direction axiale, et est radialement soutenu au moyen d'un ensemble de support (83) sur ses deux côtés axiaux,
**caractérisé en ce que** le support de masse de déviation (78) comprend axialement des deux côtés de ladite au moins une masse de déviation (80) respectivement un élément de support de masse de déviation (72, 74) en forme de disque, et **en ce que** l'ensemble de support (83) comprend de chaque côté axial de l'ensemble de masse de déviation (38) un élément de support (84, 86) en forme de disque relié à l'élément de support de masse de déviation (72, 74) prévu de ce côté axial de l'ensemble de masse de déviation (38), et l'un des éléments de support (84, 86) est relié par soudage, dans sa zone d'extrémité radialement intérieure, au support d'éléments de friction côté entraînement (50), et **en ce que** l'autre élément de support (86) s'étend radialement plus loin à l'intérieur au-delà de la zone d'extrémité radialement intérieure dudit élément de support (84).

2. Ensemble de transmission de couple selon la revendication 1, **caractérisé en ce que** l'autre élément de support (86), dans sa zone d'extension recouvrant radialement ledit élément de support (84), est réalisé sous une forme substantiellement identique audit élément de support (84).

3. Ensemble de transmission de couple selon l'une quelconque des revendications 1 et 2, **caractérisé en ce qu'**un élément d'entraînement de pompe (92) pouvant être mis en liaison d'entraînement avec une pompe à fluide est prévu sur un élément de support (86).

4. Ensemble de transmission de couple selon la revendication 1 et la revendication 3, **caractérisé en ce que** l'élément d'entraînement de pompe (92) est prévu au niveau d'une zone d'extrémité radialement intérieure de l'autre élément de support (86).

5. Ensemble de transmission de couple selon l'une quelconque des revendications 1 à 4, **caractérisé en ce que** les deux éléments de support de masse de déviation (72, 74) sont reliés l'un à l'autre par une pluralité d'éléments d'espacement (76) qui les maintiennent à une distance axiale prédéterminée l'un de l'autre, et **en ce que** sur au moins un côté axial de l'ensemble de masse de déviation (38), un élément de support (84, 86) est relié par au moins un élément d'espacement (76), de préférence par plusieurs éléments d'espacement (76), à l'élément de support de masse de déviation (72, 74) prévu sur ce côté axial.

6. Système d'entraînement, comprenant un groupe d'entraînement et un ensemble de transmission de couple (32) selon l'une quelconque des revendications précédentes, dans lequel le support d'éléments de friction côté entraînement (50) est couplé, de préférence au moyen d'un ensemble d'amortissement d'oscillation de torsion (16), à un arbre d'entraînement (12) du groupe d'entraînement pour une rotation commune, et le support d'éléments de friction côté entraîné (54) est couplé à un arbre d'entrée de boîte de vitesses (60) d'une boîte de vitesses (34) pour une rotation commune, l'ensemble de transmission de couple (32) étant disposé dans un espace lubrifié (44) fermé de manière substantiellement étanche aux fluides.

7. Système d'entraînement selon la revendication 6, **caractérisé en ce que** l'ensemble de masse de déviation (38) est porté par l'ensemble de support (83) sur son côté axial, tourné vers le groupe d'entraînement, sur le support d'éléments de friction côté entraînement (50), ou/et **en ce que** l'ensemble de masse de déviation (38) est soutenu au moins radialement par rapport à la boîte de vitesses (34), par l'ensemble de support (83) sur son côté axial tourné vers la boîte de vitesses (34) .

8. Système d'entraînement selon la revendication 3 et la revendication 7, **caractérisé en ce que** l'élément d'entraînement de pompe (92) est positionné en venant en prise avec un carter de boîte de vitesses (46) pour le couplage avec la pompe à fluide prévue dans la boîte de vitesses (34) en étant soutenu au moins radialement par rapport au carter de boîte de vitesses (46).

9. Système d'entraînement selon la revendication 8, **caractérisé en ce que** l'élément d'entraînement de pompe (92) ou/et un élément de support (86) comportant celui-ci sont soutenus axialement par rapport au carter de boîte de vitesses (46).

10. Système d'entraînement selon l'une quelconque des revendications 6 à 8, **caractérisé en ce que** le support d'éléments de friction côté entraîné (58) est soutenu axialement par rapport à l'arbre d'entrée de boîte de vitesses (60) ou à un arbre creux de soutien (106) entourant l'arbre d'entrée de boîte de vitesses (60).

11. Système d'entraînement selon l'une quelconque des revendications 6 à 8, **caractérisé en ce que** le support d'éléments de friction côté entraînement (50) est soutenu radialement par rapport à l'arbre d'entrée de boîte de vitesses (60) ou/et au support d'éléments de friction côté entraîné (54).

12. Système d'entraînement selon la revendication 11, **caractérisé en ce que** le support d'éléments de friction côté entraînement (50) est relié à un moyeu d'entraînement (40), et le moyeu d'entraînement (40) est monté radialement sur l'arbre d'entrée de boîte de vitesses (60) ou/et est monté axialement ou/et radialement sur un moyeu d'entraînement (58) relié au support d'éléments de friction côté entraîné (54).
